# EUROPÄISCHE PATENTSCHRIFT

(11) **EP 2 926 122 B1**
(45) Veröffentlichungstag und Bekanntmachung des Hinweises auf die Patenterteilung: **01.12.2021**
(21) Anmeldenummer: 13789503.3
(22) Anmeldetag: 23.10.2013
(51) Int. Cl.: B05C 1/08, B05D 1/28, G01N 21/84

(54) **VERFAHREN UND VORRICHTUNG ZUM PRÜFEN DER VOLLSTÄNDIGKEIT EINES AUFTRAGS VON EINER TRANSPARENTEN SCHICHT EINES MEDIUMS AUF EINEM TRÄGERMATERIAL**
METHOD AND DEVICE FOR TESTING THE INTEGRITY OF AN APPLICATION OF A TRANSPARENT LAYER OF A MEDIUM ON A CARRIER MATERIAL
PROCÉDÉ ET DISPOSITIF POUR VÉRIFIER L'INTÉGRALITÉ DU REVÊTEMENT D'UN MATÉRIAU SUPPORT AVEC UNE COUCHE TRANSPARENTE D'UNE SUBSTANCE

(30) Priorität: 30.11.2012 DE 102012111651
(43) Veröffentlichungstag der Anmeldung: 07.10.2015
(73) Patentinhaber: Bundesdruckerei GmbH, 10969 Berlin (DE)
(72) Erfinder: OSYRA, Siegmund, 85560 Ebersberg (DE); HAGEN, Andre, 12349 Berlin (DE)
(74) Vertreter: Mammel und Maser
(86) Internationale Anmeldenummer: PCT/EP2013/072107
(87) Internationale Veröffentlichungsnummer: WO 2014/082798

(56) Entgegenhaltungen:
- DE-A1- 10 151 280
- DE-A1-102005 026 127
- US-A1- 2004 174 518
- US-A1- 2006 263 530
- US-A1- 2007 229 844

## Beschreibung

### Verfahren und Vorrichtung zum Prüfen der Vollständigkeit eines Auftrags von einer transparenten Schicht eines Mediums auf einem Trägermaterial

Die Erfindung betrifft ein Verfahren und eine Vorrichtung zum Prüfen der Vollständigkeit eines Auftrags von einer transparenten Schicht eines Mediums auf einem Trägermaterial.

Bei Aufbringen von dünnen und transparenten Schichten eines Mediums, wie beispielsweise einer Kleberschicht oder einer Lackschicht auf einem Trägermaterial, wie beispielsweise einem Dokument, insbesondere Sicherheitsdokument, kann eine automatische Erkennung von möglichen Beschichtungsdefekten, wie beispielsweise eine unvollständige Beschichtung oder Freiheit von Defekteinschlüssen oder Fremdkörpern innerhalb der Beschichtung, nicht geprüft werden. Dies beruht darauf, dass solche transparenten Beschichtungen zumeist sehr dünn sind und auf Oberflächen mit einem beliebig bunten Vordruck oder auf reflektierende Oberflächen aufgebracht werden, wodurch eine fotografische Erkennung nicht möglich ist. In vielen Anwendungsfällen darf dem aufzubringenden Medium kein Kontrastmittel beigemischt werden, welches zur Erkennung von Beschichtungsdefekten ausgewertet werden könnte.

Aus der US 2006/0263530 A1 ist ein Verfahren zur Herstellung von nicht kontinuierlichen Gegenständen mit Mikrostrukturen bekannt. Dabei werden auf einem Substrat nicht kontinuierlich beschichtete Bereiche aufgebracht, wobei die beschichteten Bereiche mit einer Mikrostruktur versehen werden.

Aus der US 2004/0174518 A1 geht ein Fehlerprüfgerät hervor, welches ein Vorder- und Rückseite eines Gegenstandes jeweils mit einer Bilderfassungseinrichtung prüft. Dabei werden beispielsweise Halbleiter-Wafer, Siliziumscheiben oder Glassubstrate von flachen Anzeigen geprüft.

Aus der DE 10 2005 026 127 A1 ist eine Druckmaschine bekannt, durch welche berührungslose Identifikationsmerkmale, wie z.B. ein RFID-Transponder, auf ein Trägermaterial aufgedruckt werden. Darauffolgend wird dieses Identifikationsmerkmal mehrfach überdruckt. Sowohl das auf das Trägermaterial aufgebrachte Identifikationsmerkmal, als auch die Überdruckung wird nach der jeweiligen Fertigstellung des Arbeitsschrittes optisch überprüft.

Der Erfindung liegt deshalb die Aufgabe zugrunde, ein Verfahren vorzuschlagen, um eine automatische Ermittlung von Beschichtungsdefekten bei einer auf einem Trägermaterial aufzubringenden transparenten Schicht ohne Beimischung von Kontrastmittel zu ermöglichen. Des Weiteren liegt der Erfindung die Aufgabe zugrunde, eine Vorrichtung zur Durchführung eines solchen Verfahrens vorzuschlagen.

Diese Aufgabe wird erfindungsgemäß durch ein Verfahren gelöst, bei dem während oder nach dem Aufbringen der Schicht auf die Auftragswalze und vor dem Übertragen der Schicht von der Auftragswalze auf das Trägermedium eine Oberflächenstruktur der Schicht des Mediums durch eine Bilderfassungseinrichtung erfasst und mit einer Auswerteeinrichtung ausgewertet wird. Durch dieses Verfahren wird eine indirekte Ermittlung der Beschichtungsvollständigkeit und der Freiheit von Defekteinschlüssen in der aufzubringenden Schicht des Mediums überprüft, das heißt, dass die Erkennung von Beschichtungsdefekten nicht direkt auf dem mit der transparenten Schicht des Mediums beschichteten Trägermaterial erfolgt, sondern bevor diese Schicht des Mediums auf das Trägermaterial übertragen wird. Bei dieser indirekten Ermittlung der Beschichtungsvollständigkeit wird mit der Bilderfassungseinrichtung die in die Schicht des Mediums eingebrachte Oberflächenstruktur erfasst und ausgewertet bevor diese auf das Trägermaterial übertragen wird. Anhand der Oberflächenstruktur kann mittels der Auswerteeinrichtung zumindest das Vorhandensein der Schicht geprüft werden. Zusätzlich kann auch deren Vollständigkeit verifiziert werden. Ebenso können einzelne Beschichtungsdefekte, wie beispielsweise eine unvollständige Beschichtung der Auftragswalze, Einschlüsse von Fremdkörpern oder sonstige Defekte, erfasst werden. Da zwischen dem Zeitpunkt der indirekten Ermittlung der Beschichtungsvollständigkeit und der aufgetragenen Schicht auf dem Trägermaterial lediglich die Beschichtung selbst, also die Übertragung der Schicht von der Auftragswalze auf das Trägermaterial im Beschichtungspunkt, erfolgt, ist eine hohe Wahrscheinlichkeit gegeben, dass die transparente Schicht des Mediums vollständig, das heißt vollflächig und mit der vorbestimmten Menge der Schichtdicke auf das Trägermedium aufgetragen wird.

Die Oberflächenstruktur der transparenten Schicht kann mit der Bilderfassungseinrichtung zeilenweise erfasst werden. Dies ermöglicht sowohl eine einfache und schnelle Überwachung als auch Auswertung. Darüber hinaus können verschieden lange Auftragswalzen und somit verschieden breite Schichten des aufzubringenden Mediums in einfacher Weise überwacht werden.

Die Bilderfassungseinrichtung umfasst zumindest eine Kamera, insbesondere eine Zeilenkamera, und eine Beleuchtungseinrichtung, insbesondere eine Zeilenbeleuchtungseinrichtung, welche zur Oberflächenstruktur hin ausgerichtet und von einer Steuereinrichtung zur Beleuchtung und Bildaufnahme angesteuert werden. Der Einsatz einer Zeilenkamera ermöglicht eine einfache Auswertung der transparenten Schicht auf der Auftragswalze. Durch den Einsatz einer Zeilenbeleuchtung, insbesondere einer Glasfaser-Zeilenbeleuchtung, kann zeilenweise ein Kontrast oder eine Schattierung an der Oberflächenstruktur entlang der Zeilen erzeugt und ermittelt werden, welche in einfacher Weise, beispielsweise mittels unterschiedlicher Graustufen, ausgewertet wird.

Ein Beginn einer Bildaufnahme von der Oberflächenstruktur der Schicht des Mediums wird durch einen Sensor gestartet, der das zu beschichtende und auf der Transporteinrichtung aufliegende Trägermaterial beim Erreichen eines Abstands vor einem Beschichtungspunkt erfasst. Dadurch beginnt die Überprüfung der Oberflächenstruktur der aufzutragenden Schicht bereits zu einem frühen Zeitpunkt - also mit einem Vorlauf, so dass bei einer weiteren Drehbewegung der Auftragswalze der erste Überprüfungspunkt bzw. der Startpunkt der Überprüfung im Beschichtungspunkt liegt, sobald das Trägermaterial ebenso den Beschichtungspunkt erreicht hat, in welchem die Auftragswalze die transparente Schicht des Mediums auf das Trägermaterial aufbringt.

Eine Triggerung der Kamera zur zeilenweisen Bildaufnahme und der Beleuchtungseinrichtung zur korrespondierenden Ausleuchtung der Oberflächenstruktur kann durch einen mit der Transporteinrichtung gekoppelten Encoder angesteuert werden. Dadurch wird die Antriebsgeschwindigkeit der Auftragswalze auf die Transportgeschwindigkeit des Trägermaterials angepasst, so dass eine Beschichtung des Trägermaterials erfolgen kann, sobald dieses den Beschichtungspunkt erreicht hat.

Eine Beleuchtungseinrichtung, insbesondere Zeilenbeleuchtung, kann in einem von einer Normalen der Oberflächenstruktur der Schicht des Mediums auf der Auftragswalze abweichenden Winkel α ausgerichtet werden, wobei eine Strahlachse der Bilderfassungseinrichtung vorzugsweise in der Normalen zur Oberfläche der Auftragswalze liegt. Dadurch kann aufgrund der Oberflächenstruktur in der Schicht eine Schattenbildung erzeugt werden, welche durch eine Bildaufnahme der Bilderfassungseinrichtung erfasst wird. Sofern beispielsweise die Oberflächenstruktur durch Rillen ausgebildet ist, entstehen durch die Reflexion des von der Zeilenbeleuchtung ausgegebenen Lichtes an den Rillen bzw. den Wellen Maxima und Minima. Das Maxima entsteht durch eine Totalreflexion und ein Minima entsteht, sofern das von der Oberflächenstruktur zurückreflektierte Licht von der Bilderfassungseinrichtung nicht oder nur teilweise erfasst wird. Dazwischen wird durch die Krümmung der Oberflächenstruktur das Licht teilweise reflektiert, so dass durch die Streuung des Lichtes die Wellenausbildung erfassbar ist. Dadurch kann die Oberflächenkrümmung über den jeweiligen Betrag des zurückreflektierten Lichtes in der Bildaufnahme abgebildet und von einer Auswerteeinheit in unterschiedlichen Schattierungen, insbesondere Graustufen, ausgegeben und sowohl das Vorhandensein als auch die Vollständigkeit der Schicht überwacht werden.

Nach einer weiteren bevorzugten Ausgestaltung der Erfindung wird die Oberflächenstruktur mit einer Aufnahmewalze auf die Schicht des Mediums im Übergabepunkt mit der Auftragswalze aufgebracht. Die Aufnahmewalze kann eine profilierte oder strukturierte Oberfläche aufweisen, so dass nach dem Ablösen der Schicht des Mediums von der Aufnahmewalze die Oberflächenstruktur der Walzenoberfläche der Aufnahmewalze in der Schicht des Mediums auf der Auftragswalze verbleibt. Durch den Einsatz der Aufnahmewalze können hohe Arbeitsgeschwindigkeiten erzielt werden. Die Aufnahmewalze entnimmt vorzugsweise von einem Vorratsspeicher das aufzubringende Medium.

Die Auftragswalze kann gemäß einer bevorzugten Ausführungsform gegenläufig zur Transportrichtung der Transporteinrichtung angetrieben werden. Somit ist die Rotationsrichtung entgegengesetzt zur Transportrichtung. Dadurch kann ein gleichmäßiger, vollständiger Auftrag des Mediums ermöglicht sein. Alternativ kann die Drehrichtung der Auftragswalze auch in Transportrichtung sein.

Die der Erfindung zugrunde liegende Aufgabe wird des Weiteren durch eine Vorrichtung zum Prüfen eines Auftrags von einer transparenten Schicht eines Mediums auf einem Trägermaterial gelöst, welche mit einer Transporteinrichtung ein Trägermaterial einer Beschichtungseinrichtung zuführt, welche zumindest eine Auftragswalze zum Aufbringen der Schicht des Mediums in einem Beschichtungspunkt auf das Trägermaterial umfasst, wobei mit einer Bilderfassungseinrichtung, die zumindest eine Kamera und eine Beleuchtungseinrichtung umfasst, welche nach einem Übergabepunkt von der transparenten Schicht des Mediums auf die Auftragswalze und vor dem Beschichtungspunkt, bei dem die Schicht auf das Trägermaterial aufgebracht wird, eine Oberflächenstruktur der sich auf der Auftragswalze befindenden Schicht erfasst und überprüft. Dadurch kann eine indirekte Ermittlung der Vollständigkeit der aufzubringenden transparenten Schicht eines Mediums auf das Trägermaterial überprüft werden, ohne dabei Kontrastmittel zu verwenden. Darüber hinaus wird dadurch auch das Erkennen von sehr dünnen Schichten - unabhängig von der Ausgestaltung der Oberfläche des Trägermaterials - ermöglicht. Insbesondere bei reflektierenden Oberflächen oder inhomogenen Oberflächen, das heißt Oberflächen mit Vordrucken, Musterungen, verschiedenen Farbaufdrucken oder dergleichen, können sehr dünne, transparente Schichten geprüft werden.

Die Beschichtungseinrichtung kann eine Aufnahmewalze umfassen, welche die Schicht des Mediums auf die Auftragswalze überträgt und die Oberflächenstruktur in die Schicht des Mediums einbringt. Dadurch können hohe Verarbeitungsgeschwindigkeiten ermöglicht werden, da ein Auftrag des Mediums in Form von rund auf rund ermöglicht ist. Alternativ zur Aufnahmewalze kann auch eine plattenförmige Matrize vorgesehen sein, welche zum Aufbringen der Oberflächenstruktur an dem Übertragungspunkt zur Auftragswalze abrollt.

Die Aufnahmewalze kann bevorzugt eine strukturierte Walzenoberfläche aufweisen. Dies ermöglicht eine einfache Einbringung der Oberflächenstruktur auf die Schicht des Mediums. Darüber hinaus können sich wiederholende und definierte Strukturen ausgebildet werden, wie beispielsweise Rillen, die insbesondere bei einer zeilenweisen Überprüfung besonders geeignet sind.

Die Auftragswalze kann eine homogene Walzenoberfläche aufweisen. Darunter ist eine einfarbige Walzenoberfläche zu verstehen, welche ohne Musterung ausgebildet ist. Die Oberfläche kann darüber hinaus als glatte Oberfläche ausgebildet sein. Bevorzugt ist die Auftragswalze als Gummiwalze ausgebildet.

Eine alternative Ausführungsform sieht vor, dass die Aufnahmewalze eine ebne bzw. eine homogene Walzenoberfläche aufweist und die Walzenoberfläche der Auftragswalze strukturiert oder profiliert ist. Dadurch kann wiederum durch die Oberflächenstruktur in der Schicht eine Schattenbildung erzeugt werden, welche durch die Bildaufnahme der Bilderfassungseinrichtung erfasst und ausgewertet werden kann.

Des Weiteren kann eine Steuerungseinrichtung vorgesehen sein, welche die Bildaufnahme der Oberflächenstruktur der Schicht des Mediums auf der Auftragswalze in Abhängigkeit einer Drehbewegung der Auftragswalze ansteuert, die über einen mit der Transporteinrichtung gekoppelten Encoder erfolgt. Dadurch werden die Bewegungsgeschwindigkeiten der Auftragswalze und des Transportbandes aufeinander abgestimmt. Insbesondere kann ein vollständiges Auftragen der Schicht entlang des gesamten Trägermaterials während dem Durchlaufen des Beschichtungspunktes durch das Trägermaterial mit vorheriger Überprüfung der Schicht erfolgen. Die Beschichtungseinrichtung kann gegenüber dem Trägermaterial auf und ab bewegbar angesteuert werden. Ein Absenken erfolgt, um im Beschichtungspunkt die Beschichtung auf das Trägermaterial aufzutragen. Ein Anheben der Beschichtungseinrichtung erfolgt beispielsweise am Ende des Trägermaterials bzw. zu dem Zeitpunkt, zu welchem der Auftrag der Schicht auf dem Trägermaterial enden soll. Dies weist zusätzlich den Vorteil auf, dass eine unbeabsichtigte Beschichtung des Transportbands im Zwischenraum zwischen zwei aufeinander folgenden Trägermaterialien ausbleibt und zum Trägermaterial sehr dünn ist. Dies ist insbesondere bei der Ausgestaltung der Schicht als transparenter Kleber von Vorteil.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht der erfindungsgemäßen Vorrichtung zum Prüfen der Vollständigkeit eines Auftrags von einer transparenten Schicht eines Mediums auf einem Trägermaterial,
Figur 2 eine schematisch vergrößerte Ansicht einer Oberflächenstruktur der transparenten Schicht auf einer Auftragswalze und
Figur 3 eine schematische Ansicht einer Bildaufnahme, resultierend aus einer Schattenbildung an der Oberflächenstruktur der transparenten Schicht auf der Auftragswalze gemäß Figur 2.

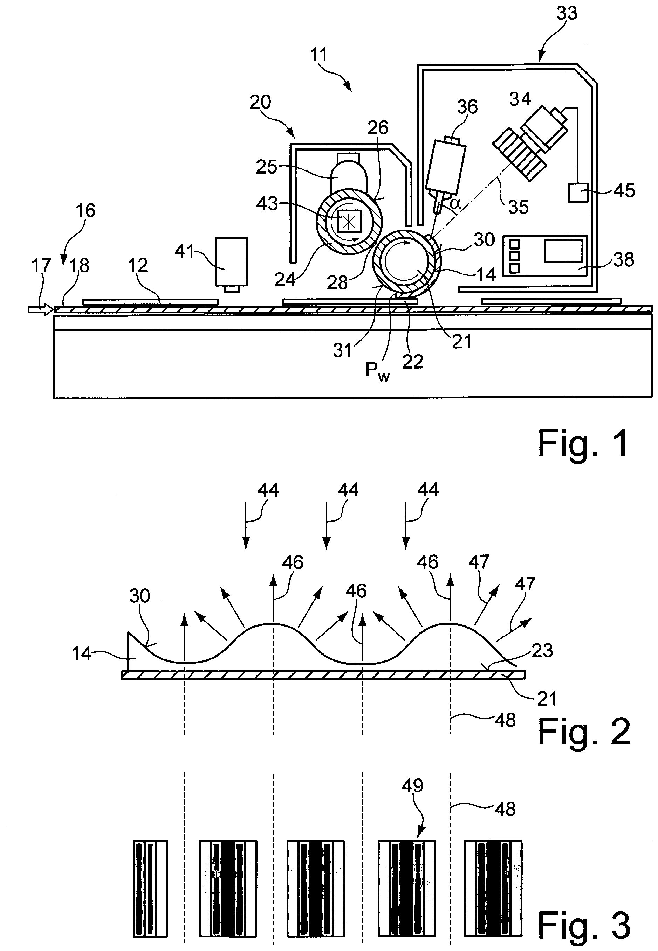

In Figur 1 ist eine schematische Ansicht einer Vorrichtung 11 zum Prüfen der Vollständigkeit eines Auftrags von einer transparenten Schicht 14 eines Mediums auf ein Trägermaterial 12 dargestellt. Bei dem Trägermaterial 12 kann es sich um Dokumente, wie beispielsweise Wert- oder Sicherheitsdokumente, handeln, welche aus einer oder mehreren Schichten bestehen.

Bei dem Medium kann es sich um fließfähige Medien, insbesondere Klebemittel und/oder Lackschichten, handeln, die auf das Trägermedium 12 aufzubringen sind. Dieses Medium ist transparent. Aufgrund des nachfolgenden Bearbeitungsprozesses bzw. des nachfolgenden Auftragens eines weiteren Films oder einer Folie oder Schicht kann diesem Medium kein Kontrastmittel beigefügt werden, um die dann auf das Trägermaterial 12 aufgebrachte Schicht optisch in direkter Form überprüfen zu können.

Die Vorrichtung 11 umfasst eine Transporteinrichtung 16, durch welche das Trägermaterial 12 in Transportrichtung, beispielsweise gemäß Pfeil 17, einer Beschichtungseinrichtung 20 zugeführt wird. Dabei kann das Trägermaterial 12 auf einem Transportband 18 aufliegen, welches von einem nicht näher dargestellten Antriebsmotor angetrieben wird.

Die Beschichtungseinrichtung 20 umfasst zumindest eine Auftragswalze 21, durch welche an einem Beschichtungspunkt 22 die auf der Auftragswalze 21 aufgebrachte Schicht 14 auf das Trägermaterial 12 aufgebracht wird. Während dem Beschichten oder Auftragen durchläuft das Trägermaterial 12 den Beschichtungspunkt 22, wobei durch eine Drehbewegung der Auftragswalze 21 die Schicht 14 auf das Trägermaterial 12 aufgetragen wird.

Die Beschichtungseinrichtung 20 kann des Weiteren eine Aufnahmewalze 24 umfassen, welche beispielsweise unmittelbar das Medium von einem Vorratsspeicher 25 bedarfsmäßig entnimmt. Die Aufnahmewalze 24 weist eine Walzenoberfläche 26 auf, welche vorzugsweise metallisch ausgebildet ist. In diese Walzenoberfläche 26 ist eine Profilierung eingebracht. Diese Profilierung kann beispielsweise in Form von Rillen, Rauten oder weiteren geometrischen Konturen, vorzugsweise sich wiederholenden Konturen, ausgebildet sein, die voll umfänglich über die Walzenoberfläche 26 eingebracht sind.

Das von dem Vorratsspeicher 25 mit der Aufnahmewalze 24 entnommene Medium wird auf die Auftragswalze 21 im Übertragungspunkt 28 aufgetragen, wobei gleichzeitig beim Ablösen der transparenten Schicht 14 von der Aufnahmewalze 24 auf der Schicht 14 eine Oberflächenstruktur 30 eingebracht wird, welche in komplementärer Weise der Profilierung der Walzenoberfläche 26 entspricht.

Die Auftragswalze 21 weist bevorzugt eine homogene Walzenoberfläche 31 auf, das heißt, diese Walzenoberfläche 31 ist einfarbig und ohne Konturen, Musterungen oder dergleichen. Die Walzenoberfläche 31 der Auftragswalze 21 ist bevorzugt gummiert.

Eine Bilderfassungseinrichtung 33 ist benachbart zur Beschichtungseinrichtung 20 angeordnet. Diese Bilderfassungseinrichtung 33 weist eine Kamera 34, insbesondere Zeilenkamera, auf, deren Strahlachse 35 senkrecht zur Walzenoberfläche 31 der Auftragswalze 21 ausgerichtet ist. Des Weiteren umfasst die Bilderfassungseinrichtung 33 eine Beleuchtungseinrichtung 36, welche bevorzugt als Zeilenbeleuchtung, insbesondere Glasfaser-Zeilenbeleuchtung, ausgebildet ist. Diese Zeilenbeleuchtung 36 ist in einem Winkel α zur Normalen der Walzenoberfläche 31 der Auftragswalze 21 bzw. der Strahlachse 35 der Kamera 34 angeordnet.

Des Weiteren umfasst die Vorrichtung 11 eine Steuerungseinrichtung 38, welche zumindest mit einem Sensor 41 kommuniziert, der in Transportrichtung 17 gesehen vor der Beschichtungseinrichtung 20 positioniert ist sowie ein ankommendes Trägermaterial 12 erkennt und bei der Erkennung ein Signal an die Steuerungseinrichtung 38 ausgibt. Des Weiteren kommuniziert die Steuerungseinrichtung 38 mit einem Encoder 43, der die Aufnahmewalze 24 und vorzugsweise auch die Auftragswalze 21 ansteuert, wobei dieser Encoder 43 wiederum mit dem Antrieb der Transporteinrichtung 16 gekoppelt ist. Des Weiteren kommuniziert die Steuerungseinheit 38 mit der Kamera 34 und der Beleuchtungseinrichtung 36, so dass von der Oberflächenstruktur 30 der Schicht 14 des Mediums auf der Auftragswalze 21 bedarfsmäßig Bildaufnahmen angefertigt werden können, um eine automatisch Erkennung von gegebenenfalls vorliegenden Beschichtungsdefekten zu ermöglichen. Die von der Kamera 34 erfassten Signale werden an eine Auswerteeinrichtung 45 weitergeleitet, durch welche Bildaufnahmen ausgewertet und beispielsweise auf einer Anzeige ausgegeben werden.

Durch die Vorrichtung 11 wird beispielsweise eine dünne Schicht eines transparenten Klebemittels auf das Trägermaterial 12 aufgebracht. Diese dünnen Schichten können eine Schichtdicke im Bereich von beispielsweise 10 µm bis 50 µm aufweisen. In einem auf die Klebebeschichtung nachfolgenden, nicht näher dargestellten Arbeitsschritt wird auf diese Klebemittelschicht eine Folie, insbesondere Hologrammfolie, aufgebracht. Damit eine vollständige Verbindung eines solchen Hologrammfilms oder einer solchen Hologrammfolie gewährleistet ist, bedarf es der vollständigen Aufbringung der Kleberschicht. Um dies sicherzustellen, wird das vollständige Aufbringen dieses Klebemittels bzw. Mediums gemäß dem nachfolgenden Verfahren automatisch überwacht, um Beschichtungsdefekte zu erkennen und auszugeben.

Sobald durch den Sensor 41 ein kommendes Trägermaterial 12 erkannt wird, erfolgt über die Steuereinheit 38 ein Signal an die Kamera 34 und Beleuchtungseinrichtung 36, um die Oberflächenstruktur 30 der Schicht 14 auf der Auftragswalze 21 zu erfassen. Dabei werden sowohl die Kamera 34 als auch die Beleuchtung 36 gemeinsam über den Encoder 43 zur zeilenweisen Beleuchtung und Bildaufnahme angesteuert. Eine erste Bildaufnahme erfolgt im Punkt Pw. Beim Ausführungsbeispiel ist vorgesehen, dass die Auftragswalze 24 in entgegengesetzter Richtung zur Transportrichtung 17 rotiert. Durch die zunehmende Drehbewegung der Auftragswalze 21 werden Zeile für Zeile der Schicht 14 erfasst und überwacht. Die Auftragswalze 21 wird derart zur Transporteinrichtung 15 angesteuert, dass der Punkt Pw im Beschichtungspunkt 22 liegt, sobald das Trägermaterial 12 ebenso den Beschichtungspunkt erreicht hat. Anschließend wird das Trägermaterial 12 unter der Auftragswalze 21 hindurchgeführt, bis eine vollständige Beschichtung erfolgt ist.

Die Auswertung und Überwachung der Schicht 14 wird nachfolgend anhand der Figuren 2 und 3 näher erörtert.

Die Oberflächenstruktur 30 ist beispielsweise rillenförmig ausgebildet. Aufgrund des Winkels a, unter welchem die Beleuchtungseinrichtung 36 zur Strahlachse 35 der Kamera 34 angeordnet ist, wird ein Teil des einfallenden Lichtes 44 gemäß den Pfeilen 46 in Richtung Kamera 34 reflektiert sowie ein Teil des einfallenden Lichtes 44 gemäß den Pfeilen 47 geringfügig und auch nicht mehr zurückreflektiert. Daraus ergeben sich unterschiedliche Schattierungen, wie dies in Figur 3 dargestellt ist. Aufgrund der Wellen und Täler der Oberflächenstruktur 30 ergeben sich durch die Reflexion des Lichtes Maxima 48 und Minima 49, die in Graustufen von der Auswerteeinrichtung 45 ausgewertet werden. Im Bereich der vollständigen Reflexion liegt ein Maxima 48. Mit zunehmender Oberflächenkrümmung erfolgt eine Abnahme der Reflexion, wodurch ein Minima 49 entsteht. Aufgrund der dadurch entstehenden Grauschattierungen können sowohl das Vorhandensein als auch die Vollständigkeit bzw. die Menge, also aufzutragende Schichtdicke, erfasst werden.

Die Verschattung oder Schattierung ermöglicht eine Auswertung und somit eine indirekte Ermittlung der Beschichtungsvollständigkeit. Dies eröffnet die Möglichkeit einer Automatisierung der indirekten Ermittlung der Beschichtungsvollständigkeit, so dass dieses Verfahren inline in einen vor- und/oder einen nachgeschalteten Arbeitsprozess integriert werden kann.

Die vorstehend beschriebenen Merkmale der Erfindung sind jeweils für sich oder in Kombination erfindungswesentlich.

## Patentansprüche

1. Verfahren zum Prüfen der Vollständigkeit eines Auftrags von einer transparenten Schicht (14) eines Mediums auf einem Trägermaterial (12), bei dem auf eine Auftragswalze (21) eine Schicht (14) des Mediums aufgebracht wird, bei dem durch die Auftragswalze (21) die Schicht (14) des Mediums auf das zu beschichtende Trägermaterial (12) aufgebracht wird, **dadurch gekennzeichnet, dass**
- während oder nach dem Aufbringen der Schicht (14) des Mediums auf die Auftragswalze (21) und vor dem Aufbringen der Schicht (14) des Mediums auf das Trägermaterial (12) eine Oberflächenstruktur (30) in die Schicht (14) des Mediums eingebracht wird
- dass vor dem Aufbringen der Schicht (14) des Mediums von der Auftragswalze (21) auf das Trägermaterial (12) die Oberflächenstruktur (30) der Schicht (14) mit einer Bilderfassungseinrichtung (33) erfasst wird , welche zumindest eine Kamera (34) und eine Beleuchtungseinrichtung (36) umfasst, die zur Oberflächenstruktur (30) ausgerichtet von einer Steuerungseinrichtung (38) angesteuert werden und mit einer Auswerteeinrichtung (45) ausgewertet wird.

2. Verfahren nach Anspruch 1, **dadurch gekennzeichnet, dass** die Oberflächenstruktur (30) der Schicht (14) mit der Bilderfassungseinrichtung (33) zeilenweise erfasst wird.

3. Verfahren nach Anspruch 1, **dadurch gekennzeichnet, dass** ein Beginn einer Bildaufnahme von der Oberflächenstruktur (30) der Schicht (14) des Mediums durch einen Sensor (41) initiiert wird, der vorzugsweise in einem vorbestimmten Abstand vor einem Beschichtungspunkt (22) des zu beschichtenden Trägermaterials (12), welches auf einer Transporteinrichtung (16) zugeführt wird, angeordnet ist.

4. Verfahren nach Anspruch 1, **dadurch gekennzeichnet, dass** eine Triggerung der Kamera (34) zur zeilenweisen Bildaufnahme und der Beleuchtungseinrichtung (36) zur korrespondierenden Ausleuchtung der Oberflächenstruktur (30) durch einen mit der Transporteinrichtung (16) gekoppelten Encoder (43) angesteuert wird.

5. Verfahren nach Anspruch 1, **dadurch gekennzeichnet, dass** die Beleuchtungseinrichtung (36) in einem von einer Normalen zur Oberflächenstruktur (30) abweichenden Winkel α geneigt ausgerichtet ist und insbesondere eine Strahlachse (35) der Bilderfassungseinrichtung (33) zur Normalen zur Oberflächenstruktur (30) ausgerichtet wird.

6. Verfahren nach Anspruch 1, **dadurch gekennzeichnet, dass** das von der Beleuchtungseinrichtung (33) ausgestrahlte Licht an der Oberflächenstruktur (30) zumindest teilweise reflektiert sowie die an der Oberflächenstruktur (30) reflektierten Lichtstrahlen (46, 47) erfasst und deren Intensität ausgewertet werden.

7. Verfahren nach Anspruch 1, **dadurch gekennzeichnet, dass** die Oberflächenstruktur (30) der Schicht (14) des Mediums mit einer Aufnahmewalze (24), welche vorzugsweise aus einem Vorratsspeicher (25) das Medium entnimmt, im Übergabepunkt (28) zur Auftragswalze (21) aufgebracht wird.

8. Verfahren nach Anspruch 1, **dadurch gekennzeichnet, dass** die Auftragswalze (21) gegenläufig zur Transportrichtung der Transporteinrichtung (16) angetrieben wird.

9. Vorrichtung zum Prüfen der Vollständigkeit eines Auftrags einer transparenten Schicht (14) eines Mediums auf ein Trägermedium (12), insbesondere zur Durchführung des Verfahrens nach einem der Ansprüche 1 bis 8, mit einer Transporteinrichtung (16) zum Transport von zumindest einem Trägermaterial (12), mit einer Beschichtungseinrichtung (20), welche zumindest eine Auftragswalze (21) zum Auftragen der Schicht (14) des Mediums auf das Trägermaterial (12) umfasst, und mit einer Bilderfassungseinrichtung (33), welche zumindest eine Kamera (34) und eine Beleuchtungseinrichtung (36) umfasst, **dadurch gekennzeichnet, dass** die Bilderfassungseinrichtung (33) derart ausgelegt ist, nach einem Übergabepunkt (28) zum Aufbringen der Schicht (14) des Mediums auf die Auftragswalze (21) und vor einem Beschichtungspunkt (22) zum Aufbringen der Schicht (14) des Mediums auf das Trägermaterial (12) eine Oberflächenstruktur (30) der Schicht (14) auf der Auftragswalze (21) zu erfassen und zu überprüfen.

10. Vorrichtung nach Anspruch 9, **dadurch gekennzeichnet, dass** eine Aufnahmewalze (24) vorgesehen ist, welche die Schicht (14) des Mediums auf die Auftragswalze (21) im Übergabepunkt (28) überträgt und die Oberflächenstruktur (30) in die Schicht (14) des Mediums einbringt.

11. Vorrichtung nach Anspruch 9, **dadurch gekennzeichnet, dass** eine Walzenoberfläche (26) der Aufnahmewalze (24) strukturiert oder profiliert ist und eine Walzenoberfläche der Auftragswalze (21) homogen, insbesondere einfarbig, ausgebildet ist.

12. Vorrichtung nach Anspruch 9, **dadurch gekennzeichnet, dass** eine Walzenoberfläche (26) der Aufnahmewalze (24) eben oder homogen ausgebildet ist und eine Walzenoberfläche der Auftragswalze (21) strukturiert oder profiliert ausgebildet ist.

13. Vorrichtung nach Anspruch 9, **dadurch gekennzeichnet, dass** eine Steuerungseinrichtung (38) vorgesehen ist, welche eine Bildaufnahme der Oberflächenstruktur (30) der Schicht (14) auf der Auftragswalze (21) in Abhängigkeit einer Drehbewegung der Auftragswalze (21) ansteuert, die wiederum über einen mit der Transporteinrichtung (16) gekoppelten Encoder (43) erfolgt.

## Claims

1. A method of verifying whether a transparent layer (14) of a given medium is integrally applied onto a support material (12), in which method a layer (14) of said medium is applied onto an applicator roller (21), said applicator roller (21) being then used to apply the medium layer (14) to the support material (12) which is to be coated, **characterised in that**
- a surface structure (30) is formed in the medium layer (14) during or after the application of the medium layer (14) onto the applicator roller (21) and prior to the application of the medium layer (14) onto the support material (12),
- prior to the application of the medium layer (14) from the applicator roller (21) to the support material (12), the surface structure (30) of the layer (14) is captured by means of an image acquisition device (33) comprising at least one camera (34) and one lighting device (36) which are oriented towards the surface structure (30) and activated by a control device (38), and said surface structure is evaluated by an evaluation device (45).

2. The method as claimed in claim 1, **characterised in that** the surface structure (30) of the layer (14) is captured line by line using the image capturing device (33).

3. The method as claimed in claim 1, **characterised in that** a beginning of an image recording of the surface structure (30) of the medium layer (14) is initiated by a sensor (41) which is preferably arranged at a predetermined distance from a coating point (22) of the support material (12) to be coated, which is supplied on a transporting device (16) .

4. The method as claimed in claim 1, **characterised in that** triggering of the camera (34) for line-by-line image recording and of the lighting device (36) for corresponding lighting of the surface structure (30) is activated by an encoder (43) which is coupled to the transporting device (16).

5. The method as claimed in claim 1, **characterised in that** the lighting device (36) is oriented in an inclined manner, at an angle α which deviates from a normal to the surface structure (30), and **in that**, in particular, a beam axis (35) of the image capturing device (33) is oriented in a manner corresponding to said normal with respect to the surface structure (30).

6. The method as claimed in claim 1, **characterised in that** the light emitted by the lighting device (33) is at least partially reflected at the surface structure (30) and **in that** the light beams (46, 47) reflected at the surface structure (30) are captured and their intensity is evaluated.

7. The method as claimed in claim 1, **characterised in that** the surface structure (30) of the medium layer (14) is applied to the applicator roller (21) at the transfer point (28) using a pick-up roller (24) which preferably picks up the medium from a storage tank (25).

8. The method as claimed in claim 1, **characterised in that** the applicator roller (21) is driven in a direction opposite to the transport direction of the transporting device (16).

9. A device for verifying whether a transparent layer (14) of a given medium is integrally applied onto a support material (12), said device serving in particular for carrying out the method as claimed in any one of claims 1 to 8, and including a transporting device (16) for transporting at least one support material (12), a coating device (20) which comprises at least one applicator roller (21) for applying the medium layer (14) onto the support material (12), and an image acquisition device (33) which comprises at least one camera (34) and one lighting device (36), **characterised in that** said image acquisition device (33) is configured in a manner so as to acquire and monitor a surface structure (30) of the layer (14) on the applicator roller (21) at a point located after the transfer point (28) for applying the medium layer (14) onto the applicator roller (21) and before a coating point (22) for applying the medium layer (14) onto the support material (12).

10. The device as claimed in claim 9, **characterised in that** a pick-up roller (24) is provided which transfers the medium layer (14) onto the applicator roller (21) at the transfer point (28) and forms the surface structure (30) in the medium layer (14).

11. The device as claimed in claim 9, **characterised in that** a roller surface (26) of the pick-up roller (24) is structured or profiled and **in that** a roller surface of the applicator roller (21) is homogeneous and, in particular, unicoloured.

12. The device as claimed in claim 9, **characterised in that** a roller surface (26) of the pick-up roller (24) is smooth or homogeneous and **in that** a roller surface of the applicator roller (21) is structured or profiled.

13. The device as claimed in claim 9, **characterised in that** a control device (38) is provided which activates image recording of the surface structure (30) of the layer (14) on the applicator roller (21) depending on a rotational movement of the applicator roller (21) which, in turn, is triggered by an encoder (43) coupled to the transporting device (16) .

## Revendications

1. Procédé destiné à vérifier si une couche transparente (14) d'une substance a été appliquée de manière intégrale sur un matériau support (12), lors duquel une couche (14) de la substance est appliquée sur un rouleau applicateur (21), lors duquel la couche (14) de la substance est appliquée sur le matériau support (12) à revêtir par ledit rouleau applicateur (21), **caractérisé en ce que**
- pendant ou après l'application de la couche (14) de la substance sur le rouleau applicateur (21) et avant l'application de la couche (14) de la substance sur le matériau support (12), une structure de surface (30) est réalisée dans la couche (14) de la substance,
- avant le transfert par application de la couche (14) de la substance du rouleau applicateur (21) sur le matériau support (12), la structure de surface (30) de la couche (14) est saisie grâce à un dispositif de saisie d'images (33), lequel comprend au moins une caméra (34) et un dispositif d'éclairage (36) qui, orientés vers la structure de surface (30), sont activés par un dispositif de commande (38), et est évaluée grâce à un dispositif d'évaluation (45).

2. Procédé selon la revendication 1, **caractérisé en ce que** la structure de surface (30) de la couche (14) est saisie ligne par ligne grâce au dispositif de saisie d'images (33).

3. Procédé selon la revendication 1, **caractérisé en ce qu'**un début d'une prise d'image de la structure de surface (30) de la couche (14) de la substance est initialisé par un capteur (41) qui est disposé de préférence à une distance prédéterminée avant un point de revêtement (22) du matériau support (12) à revêtir amené sur un dispositif de transport (16).

4. Procédé selon la revendication 1, **caractérisé en ce qu'**un déclenchement de la caméra (34) et du dispositif d'éclairage (36) est activé par un encodeur (43) couplé au dispositif de transport (16) en vue de réaliser respectivement une prise d'images ligne par ligne et un éclairage correspondant de la structure de surface (30).

5. Procédé selon la revendication 1, **caractérisé en ce que** le dispositif d'éclairage (36) est orienté de manière à être incliné selon un angle α qui diffère d'une normale à la structure de surface (30) et qu'en particulier un axe de faisceau (35) du dispositif de saisie d'images (33) est orienté conformément à la normale à la structure de surface (30) .

6. Procédé selon la revendication 1, **caractérisé en ce que** la lumière émise par le dispositif d'éclairage (33) est au moins en partie réfléchie sur la structure de surface (30) et que les faisceaux lumineux (46, 47) réfléchis sur la structure de surface (30) sont saisis et que leur intensité est évaluée.

7. Procédé selon la revendication 1, **caractérisé en ce que** la structure de surface (30) de la couche (14) de la substance est appliquée au point de transfert (28) vers le rouleau applicateur (21) grâce à un rouleau récepteur (24) qui prélève la substance de préférence à partir d'un réservoir (25).

8. Procédé selon la revendication 1, **caractérisé en ce que** le rouleau applicateur (21) est entraîné dans la direction contraire à la direction de transport du dispositif de transport (16).

9. Dispositif destiné à vérifier si une couche transparente (14) d'une substance a été appliquée de manière intégrale sur un matériau support (12), en particulier en vue de réaliser le procédé selon l'une quelconque des revendications 1 à 8, pourvu d'un dispositif de transport (16) destiné à transporter au moins un matériau support (12), d'un dispositif de revêtement (20) qui comprend au moins un rouleau applicateur (21) destiné à appliquer la couche (14) de la substance sur le matériau support (12), et d'un dispositif de saisie d'images (33) qui comprend au moins une caméra (34) et un dispositif d'éclairage (36), **caractérisé en ce que** le dispositif de saisie d'images (33) est conçu pour saisir et vérifier une structure de surface (30) de la couche (14) se trouvant sur le rouleau applicateur (21), et ce après un point de transfert (28) où la couche (14) de la substance est appliquée sur le rouleau applicateur (21) et avant un point de revêtement (22) où la couche (14) de la substance est appliquée sur le matériau support (12).

10. Dispositif selon la revendication 9, **caractérisé en ce qu'**il est prévu un rouleau récepteur (24) qui transfère, au point de transfert (28), la couche (14) de la substance sur le rouleau applicateur (21) et qui réalise la structure de surface (30) dans la couche (14) de la substance.

11. Dispositif selon la revendication 9, **caractérisé en ce qu'**une surface de rouleau (26) du rouleau récepteur (24) est structurée ou profilée et qu'une surface de rouleau du rouleau applicateur (21) est formée de manière homogène, en particulier de manière unicolore.

12. Dispositif selon la revendication 9, **caractérisé en ce qu'**une surface de rouleau (26) du rouleau récepteur (24) est formée de manière plane ou homogène et qu'une surface de rouleau du rouleau applicateur (21) est formée de manière structurée ou profilée.

13. Dispositif selon la revendication 9, **caractérisé en ce qu'**il est prévu un dispositif de commande (38) qui active une prise d'image de la structure de surface (30) de la couche (14) se trouvant sur le rouleau applicateur (21) en fonction d'un mouvement de rotation dudit rouleau applicateur (21) lequel est lui-même généré par l'intermédiaire d'un encodeur (43) couplé au dispositif de transport (16) .
